# EUROPÄISCHE PATENTSCHRIFT

(11) **EP 1 264 537 B1**
(45) Veröffentlichungstag und Bekanntmachung des Hinweises auf die Patenterteilung: **17.08.2005**
(21) Anmeldenummer: 02012402.0
(22) Anmeldetag: 07.06.2002
(51) Int. Cl.: A01J 5/013, A01J 5/007

(54) **Verfahren und Vorrichtung zur Selektion von Milch**
Method and apparatus for milk selection
Méthode et appareil de sélection du lait

(30) Priorität: 08.06.2001 DE 10127942
(43) Veröffentlichungstag der Anmeldung: 11.12.2002
(73) Patentinhaber: WestfaliaSurge GmbH, 59199 Bönen (DE)
(72) Erfinder: Redetzky, Ralf, Dr., 30559 Hannover (DE)
(74) Vertreter: Neumann, Ditmar

(56) Entgegenhaltungen:
- WO-A-00/35270
- WO-A-00/67559
- WO-A-01/29518
- WO-A-98/28969

## Beschreibung

Die Erfindung betrifft ein Verfahren sowie eine Vorrichtung zur Selektion von Milch beim maschinellen Melken.

Rohmilch ist ein wichtiges Lebensmittel und ein bedeutsamer Rohstoff für die Nahrungsmittelindustrie. Zum Schutz des Verbrauchers, zur technischen Verarbeitungsfähigkeit sowie zur Marktlenkung muß Rohmilch sowohl national als auch international bestimmten Qualitätsanforderungen genügen.

Rohmilch darf innerhalb der Bundesrepublik Deutschland gemäß § 3 der Milchverordnung keine anomalen sensorischen Merkmale aufweisen, so dass gemäß Anlage 3 der Milchverordnung Personen, die melken, die ersten Milchstrahlen aus jeder Zitze gesondert zu melken und sich durch Prüfen ihres Aussehens von der einwandfreien Beschaffenheit der Milch von jedem Tier zu überzeugen haben. Tiere, von denen Milch als Lebensmittel gewonnen wird, dürfen gemäß Anlage 1 der Milchverordnung nicht an einer erkennbaren Entzündung des Euters leiden. Entsprechende Rechtsvorschriften (RL 92/46 EWG, Anhang A und RL 89/362 EWG, Anhang Kapitel III) kommen ebenfalls innerhalb der Europäischen Union zur Anwendung.

Anzeichen einer erkennbaren Entzündung des Euters (klinische Mastitis) sind unter anderem das Vorhandensein von Flocken, bestehend aus Geweberesten, Fibrin, Zelldetritus, Blutkoagula und Mastitiserregern im Gemelk einzelner Drüsenkomplexe, Euterviertel bzw. Euterhälften und im Gesamtgemelk einzelner Tiere.

Makroskopisch erkennbare Flocken können eine Größe von ca. 100 µm bis zu mehreren Millimetern aufweisen. Das Ansammeln solcher Flocken in bestimmten Gemelksfraktionen, vorzugsweise den Vor- und Anfangsgemelken, kann zu einem hochviskösen Sekret von mehreren Millilitern führen. Derartige Flocken sind qualitätsbestimmende Partikel, die die Verkehrsfähigkeit von Rohmilch ausschließen.

Bei konventioneller Melktechnik münden gewöhnlich die kurzen Milchschläuche in einem Milchsammelstück, von wo die Milch in einem langen Milchschlauch der Milchleitung zugeführt und schließlich in einem Milchsammelbehälter aufgefangen, gekühlt und gelagert wird. Bei automatischen Melkverfahren fehlen gewöhnlich kurze Milchschläuche und ein Milchsammelstück, so dass die Milch jeder funktionellen Milchdrüse separat in einem Milchschlauch der Milchleitung zugeführt und schließlich in einem Milchsammelbehälter aufgefangen, gekühlt und gelagert wird.

Gemelke mehrerer, parallel gemolkener Tiere vermischen sich in der Milchleitung. Die im Milchsammelbehälter aufgefangene Milch wird als Herdensammelmilch bezeichnet.

Die Milch von Tieren mit erkennbarer Euterentzündung ist separat zu ermelken, wobei gewöhnlich in konventioneller Melktechnik dem langen Milchschlauch vor Einmündung in die Milchleitung ein Sammelbehälter zwischengeschaltet wird, dem die sinnfällig veränderte Milch zugeführt wird. Das Gemelk wird anschließend unschädlich beseitigt. Als Entscheidungsgrundlage dient die vorangegangene Prüfung des Aussehens gesondert gewonnenen Vorgemelks durch den Melker. In der Praxis besteht die Gefahr, dass die visuelle Sinnfälligkeitsprüfung oftmals unterlassen wird, da sie im allgemeinen zeitaufwendig und damit unwirtschaftlich ist. Einrichtungen, die das Auffangen von Flocken ermöglichen, sind durch den Melker zu kontrollieren, was ebenfalls mit einem nicht unerheblichen Zeitauf wand verbunden ist.

Bei automatischen Melkverfahren ist die Prüfung des Aussehens gesondert gewonnenen Vorgemelks durch den Melker nicht möglich und bislang durch eine geeignete technische Vorrichtung nicht gewährleistet, so dass den nationalen und internationalen Rechtsvorschriften nicht entsprochen werden kann. Aus diesem Grund ist für die Bundesrepublik Deutschland ein Maßnahmenkatalog vom BMVEL (Bundesministerium für Verbraucherschutz, Ernährung und Landwirtschaft) erlassen worden, der die Mindestanforderungen für mit automatischen Melkverfahren gewonnene Rohmilch zum Schutz des Verbrauchers enthält.

Ansätze, durch die die Überprüfung des Vorhandenseins von Flocken bzw. Partikeln in der Milch erleichtert werden soll, existieren bereits. Durch die U.S. 4,376,053 ist eine Filtereinheit bekannt, die ein Filtergehäuse mit einem nach außen offenen Spalt aufweist. In diesem ist ein Filterelement angeordnet, das von einem Dichtungsmittel tragend passenden Rahmen gehalten wird. Durch diese Ausgestaltung der Filtereinheit wird das Herausnehmen und Wiedereinsetzen des Filterelements wesentlich erleichtert. Um sicherzustellen, dass die Milchleitung durch ein verstopftes Filterelement nicht blockiert wird und das Vakuum an den Melkzeugen nicht verloren geht, ist ein Bypass-Durchlass parallel zum Strömungsweg vorgesehen. Die Überprüfung der sich am Filterelement vorhandenen Partikel erfolgt visuell durch den Melker.

Eine Weiterentwicklung der in der U.S. 4,376,053 beschriebenen Filtereinheit offenbart die WO 00/67559. Nach dieser Druckschrift wird eine Vorrichtung zur automatischen Milchaussonderung beim maschinellen Melken vorgeschlagen. Diese weist eine Messeinrichtung zum Überwachen der gewonnen Milch, eine Wegeventileinrichtung mit einem Milchgang und mehreren Milchausgängen sowie eine Verschlußeinrichtung zur wahlweisen Absperrung der Milchausgänge und zum wahlweisen Leiten des Milchstromes in einen von mehreren Leitungswegen, und einer zur Aussonderung von Milch, die Wegeventileinrichtung betätigenden Steuereinrichtung. Die Detektion der Flocken bzw. Partikel erfolgt automatisch mittels einer Partikeldetektiereinrichtung. Die Partikel bzw. Flocken werden auf einem Filterelement, das im Strömungsweg der Milch angeordnet ist, aufgefangen.

Die Bestimmung der Flocken bzw. Partikel muß tierindividuell erfolgen. Dies setzt voraus, dass eine Reinigung des Filterelementes zuverlässig und sicher erfolgen kann, ohne dass eine Kontamination nachfolgender Milchströme mit Partikeln erfolgt. Nach der WO 00/67559 wird vorgeschlagen, dass die auf den Filterelementen liegenden Partikel durch Drehung der Filterelemente mit Hilfe des Milchstromes abgelöst werden. Alternativ hierzu kann die Reinigung des Filterelementes durch einen "Weg-Splash" erfolgen. Hierbei besteht die Gefahr, dass aus dem Milchstrom nachfolgende Partikel sich auf der Rückseite des Filterelementes niederschlagen können und dadurch weitere fehlerfreie Messungen stören. Es besteht auch die Gefahr, dass partikelfreie Milchströme mit qualitätsmindemden Partikeln vorheriger Messungen kontaminiert werden.

Durch die Druckschrift WO-A-98/28969 ist ein Verfahren zum Herausfiltern von Verunreinigungen jeglicher Art aus einem Milchstrom, der in einer Leitung geführt wird, bekannt. Hierzu ist ein Filter vorgesehen. Dieser Filter kann gereinigt werden. Zur manuellen Reinigung des Filters kann der Milchstrom durch eine Bypass-Leitung geleitet werden. Der Verunreinigungsgrad des Filters wird durch einen Druckabfall am Filter festgestellt.

Durch die WO-A-00/35270 ist eine Vorrichtung zum Melken von Tieren bekannt, bei der die Milch von einem Melkbecher zu einem Speichertank über eine Milchleitung geführt wird. In der Milchleitung ist ein Filterelementpositioniert, durch das ein Filtern eines Stroms der Milch erfolgt. Des weiteren ist eine Einrichtung vorgesehen, mittels derer ein Nachweis geführt werden kann über Materialien, die auf dem Filterelement abgelagert wurden. Zur Umkehrung der Strömungsrichtung des Milchstroms ist ein entsprechendes Mittel vorgesehen.

Hiervon ausgehend liegt der vorliegenden Erfindung die Zielsetzung zugrunde, ein Verfahren sowie eine Vorrichtung anzugeben, wobei die Qualität der Milch anhand gütebestimmender Partikel festgestellt werden soll.

Erfindungsgemäß wird diese Aufgabe durch ein Verfahren mit den Merkmalen des Anspruchs 1 bzw. durch eine Vorrichtung mit den Merkmalen des Anspruchs 8 gelöst. Vorteilhafte Weiterbildungen und Ausgestaltungen des Verfahrens bzw. der Vorrichtung sind Gegenstand der jeweils abhängigen Ansprüche.

Das erfindungsgemäße Verfahren zur Selektion von Milch zeichnet sich dadurch aus, dass ein Milchstrom für eine vorgegebene Zeitspanne durch eine Messkammer einer Messeinrichtung mit wenigstens einem Filter und einer Detektoreinheit geführt wird. Diese Teilmenge der Milch wird nachfolgend erste Fraktionen eines Milchstroms bezeichnet. Befinden sich in den ersten Fraktionen eines Milchstroms Flocken bzw. Partikel, so sammeln sich diese auf dem Filter an. Es erfolgt eine Detektion der Oberfläche des Filters. Die Detektion wird durch den nachfolgenden Milchstrom nicht beeinflußt, da dieser in der Bypass-Leitung geführt wird. Die durch die Detektion erhaltenen Daten werden ausgewertet und in Abhängigkeit vom Auswerteergebnis wird der nachfolgende Milchstrom entweder zum Sammelbehälter für verkehrsfähige Milch geleitet oder verworfen.

Nach einer vorteilhaften Ausbildung des Verfahrens wird vorgeschlagen, dass der nachfolgende Milchstrom während der Detektion verworfen wird. Durch diese Maßnahmen wird sichergestellt, dass keine nicht-verkehrsfähige Milch in den Sammelbehälter für verkehrsfähige Milch gelangt.

Die Detektion kann beispielsweise mittels optischer Einrichtungen erfolgen. Vorzugsweise sind bildgebende Verfahren für die Detektion geeignet. Es besteht auch die Möglichkeit, den Filterkuchen, den die Flocken auf dem Filter bilden, durch Messung von Änderungen des elektrischen Widerstandes am Filterelement zu bestimmen. Des weiteren besteht die Möglichkeit, durch Schallmessungen auf das Vorhandensein des Filterkuchens zurückzuschließen. Diese Methoden können zur Erhöhung der Meßgenauigkeit auch miteinander kombiniert werden oder um weitere Methoden, die auf den Eutergesundheitsstatus des Tieres schließen lassen wie Milchtemperatur, elektrische Leitfähigkeit, Milchflußrate, Ionenkonzentrationen (z.B. bestimmt durch ionen-selektive Elektroden) in Milch, Konzentrationsbestimmungen weiterer Milchinhaltsstoffe wie Ketonkörper, Laktat, Laktatdehydrogenase, NAGase (z.B. bestimmt durch Biosensoren), zur Optimierung der Meßgenauigkeit ergänzt werden.

Es ist vorteilhaft, dass die Meßkammer während und nach der Detektion gegenüber dem Milchstrom abgeschlossen und nach Beendigung der Detektion bei dem Vorliegen eines positiven Befundes gereinigt wird. Dadurch, dass die Meßkammer gegenüber dem Milchstrom abgeschlossen wird, wird sichergestellt, dass ein Reinigungsmittel, welches durch die Meßkammer hindurch geführt wird, nicht in milchführende Leitungen eindringen kann.

Die Reinigung der Meßkammer erfolgt vorzugsweise derart, dass ein Reinigungsmittel mindestens den wenigstens einen Filter entgegengesetzt zur Strömungsrichtung des Milchstroms durchströmt. Hierdurch werden die auf dem wenigstens einem Filter abgelagerten Flocken bzw. Partikel von dem Filter gelöst und aus der Meßkammer herausgetragen.

Vorzugsweise wird für die Detektion die Meßkammer mittels Ventileinrichtungen, die durch eine Steuereinheit gesteuert werden, gegenüber der Milchleitung abgeschlossen und bleiben auch während des Reinigungsvorgangs verschlossen.

Der Reinigungserfolg kann mittels der Detektoreinheit überprüft werden. Wird festgestellt, dass der Reinigungserfolg nicht in dem gewünschten Maße eingetreten ist, wird der Reinigungsvorgang solange wiederholt, bis der gewünschte Reinigungserfolg eintritt. Die dafür verfügbare Zeitspanne wird durch die Melkdauer des Tieres limitiert.

Es wird ferner vorgeschlagen, dass die Zeitspanne, die für die Detektion erforderlich ist, so kurz wie technisch möglich gehalten wird und damit möglichst geringste Milchmengen während der Detektion verworfen werden. Erfindungsgemäß wird eine Milchflusserkennung vorgeschlagen, so dass die vorgegebene Zeitspanne auch in Abhängigkeit vom Volumenstrom des Milchstroms bestimmt wird. Die Milchflusserkennung kann auch zur Aktivierung des Verfahrens herangezogen werden. Die Milchflusserkennung erfolgt vorzugsweise mittels eines Milchflusssensors, der erfindungsgemäß vor der Meßkammer angeordnet ist. Es besteht auch die Möglichkeit, den Milchflußsensor in dem Meßkammereinlass, der Meßkamer selbst oder dem Meßkammerablauf zu positionieren.

Erfindungsgemäß erfolgt eine Reaktion auf das vom Milchflußsensor eingehende Signal um eine zu definierende oder/und einstellbare Zeitspanne zeitverzögert, damit gewährleistet ist, dass eine ausreichende Menge des Vorgemelks die Meßkammer durchströmt.

Nach einem weiteren erfinderischen Gedanken wird eine Vorrichtung zur Selektion von Milch vorgeschlagen. Die Vorrichtung weist eine Milchleitung auf. In der Milchleitung ist eine Meßeinrichtung angeordnet. Die Meßeinrichtung weist eine Meßkammer mit wenigstens einem Filter und eine Detektoreinheit auf. Des weiteren ist eine Steuereinheit vorgesehen, die mit der Detektoreinheit verbunden ist. Die Vorrichtung zeichnet sich dadurch aus, dass eine Bypass-Leitung vorgesehen ist, so dass der Milchstrom zunachst durch die Meßeinrichtung und dann durch die Bypass-Leitung geführt wird. Stromabwärts der Mündung der Bypass-Leitung ist in der Milchleitung eine steuerbare Ventileinrichtung vorgesehen. Diese steuerbare Ventileinrichtung ist mit der Steuereinheit verbunden. In Abhängigkeit von dem Ergebnis der Detektion gibt die Ventileinrichtung eine Leitung für die verwertbare Milch oder eine Leitung für die nicht verwertbare Milch frei.

Die erfindungsgemäße Vorrichtung zur Selektion von Milch weist einen relativ einfachen konstruktiven Aufbau auf. Sie ermöglicht die Bestimmung der Verkehrsfähigkeit der Milch zu Beginn eines Melkvorgangs, indem sie qualitätsbestimmende Partikel detektiert. Die Bestimmung erfolgt mittels einer Detektoreinheit, wobei für die Detektierung der Oberfläche des Filters der Milchstrom durch die Bypass-Leitung geführt wird.

Gemäß einer vorteilhaften Ausbildung der Vorrichtung wird vorgeschlagen, dass diese eine Reinigungseinrichtung aufweist, wobei ein Reinigungsmittel mindestens den wenigstens einen Filter entgegengesetzt zur Strömungsrichtung des Milchstroms durchströmt.

Die Reinigungseinrichtung weist vorzugsweise eine Leitung für ein Reinigungsmittel auf Die Meßkammer ist im Strömungsweg des Reinigungsmittels angeordnet. Im Bereich vor und hinter der Meßkammer ist jeweils eine Ventileinheit vorgesehen. Diese Ventileinheiten sind mit der Steuereinheit verbunden, so dass die Meßkammer entweder mit der Milchleitung oder der Leitung für ein Reinigungsmittel verbunden oder vollständig von sämtlichen Leitungswegen abgeschlossen wird. Durch diese vorteilhafte Ausbildung der Vorrichtung wird sichergestellt, dass die am Filter abgelagerten Flocken bzw. Partikel nicht in die Milchleitung gelangen. Es wird weiterhin sichergestellt, dass die Detektion der am Filter abgelagerten Flocken bzw. Partikel nicht durch die Meßkammer durchströmende Milch gestört wird. Des weiteren wird eine Kontamination der milchführenden Leitungen durch ein Reinigungsmittel bzw. eine Reinigungsflüssigkeit verhindert und damit eine physikalische Trennung zwischen den reinigungsmittelführenden Teilen und den milchführenden Teilen während des Reinigungsvorgangs erreicht.

Erfingungsgemäß ist eine Ausbildung der Vorrichtung bei der vor der Messkammer eine Einheit zur Milchflusserkennung vorgesehen und diese mit der Steuereineheit verbunden ist. Hierdurch wird erreicht, dass die Zeitspanne, die für die Detektion erforderlich ist, so kurz wie technisch möglich gehalten kann und damit möglichst geringste Milchmengen während der Detektion verworfen werden. Die Milchflusserkennung kann auch zur Aktivierung des Verfahrens herangezogen werden. Die Milchflusserkennung erfolgt vorzugsweise mittels eines Milchflusssensors, der erfindungsgemäß vor der Meßkammer angeordnet ist. Es besteht auch die Möglichkeit, den Milchflußsensor in dem Meßkammereinlass, der Meßkamer selbst oder dem Meßkammerablauf zu positionieren.

Weitere Einzelheiten und Vorteile der Erfindung werden anhand des in den Zeichnungen dargestellten Ausffihrungsbeispiels erläutert.
Es zeigen:
- Fig. 1:: Schematisch eine Vorrichtung zur Selektion von Milch,
- Fig. 2a bis 2m:: Momentaufnahmen während eines Betriebes der Vorrichtung nach Fig. 1,

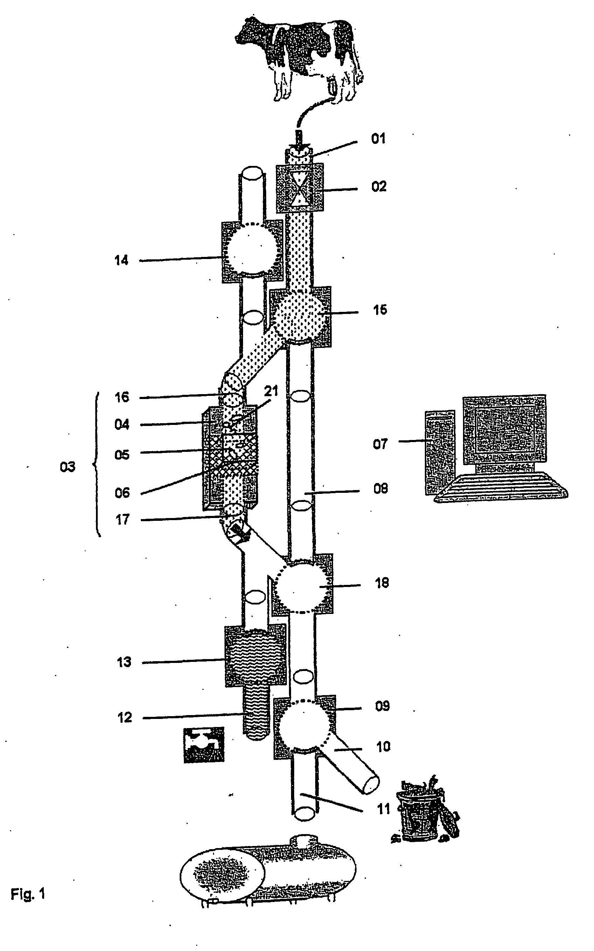

Fig. 1 zeigt schematisch ein bevorzugtes Ausführungsbeispiel der Vorrichtung zur Selektion von Milch. Die Vorrichtung weist eine Milchleitung 1 auf. In der Milchleitung 1 sind ein Milchflußsensor 2 und eine Meßeinrichtung 3 angeordnet, so dass diese für einen Milchstrom durchströmbar ist. Die Meßeinrichtung 3 weist eine Meßkammer 4 auf, in der wenigstens ein Filter 5 angeordnet ist. Des weiteren weist die Meßeinrichtung 3 eine Detektoreinheit 6 auf, die in der Figur 1 nur angedeutet ist. Mit dem Bezugszeichen 7 ist eine Steuereinheit bezeichnet, die auch einen Computer umfaßt. Die Steuereinheit 7 ist mit dem Milchflußsensor 2 und mit der Detektoreinheit 6 verbunden.

Parallel zur Strömungsrichtung der Milch ist eine Bypass-Leitung 8 vorgesehen, so dass der Milchstrom wahlweise durch die Meßeinrichtung 3 oder durch die Bypass-Leitung 8 geführt werden kann. Die Bypass-Leitung 8 mündet stromabwärts in die Milchleitung 1. Stromabwärts der Mündung der Bypass-Leitung 8 in der Milchleitung 1 ist eine Ventileinrichtung 9 vorgesehen, die durch die Steuereinheit 7 gesteuert wird. Durch die Ventileinrichtung 9 wird der Milchstrom entweder in eine Leitung 11 für die verkehrsfähige Milch oder in eine Leitung 10 für die nicht-verkehrsfähige Milch geleitet.

Oberhalb der Meßeinrichtung 3 ist in der Milchleitung 1 ein Ventil 15 vorgesehen. Bei dem Ventil 15 handelt es sich um ein Mehrwegeventil. Das Ventil 15 ist mit der Steuereinheit 7 verbunden, die ihrerseits mit dem Milchflußsensor 2 verbunden ist.

Die in der Milchleitung 1 einströmende Milch durchströmt den Milchflußsensor 2, der ein Signal an die Steuereinheit 7 aussendet. Die Steuereinheit 7 sendet bei erkanntem Milchfluß ein Signal an das Ventil 15, das zeitverzögert die Zuleitung zur Meßeinrichtung 3 verschließt und gleichzeitig die Bypass-Leitung 8 für den Milchstrom öffnet, so dass der Milchstrom durch die Bypass-Leitung 8 in die Milchleitung 1 geführt wird.

Des weiteren ist ein Ventil 18 vorgesehen, das ebenfalls mit der Steuereinheit 7 verbunden ist, zeitgleich mit dem Ventil 15 zur Aufrechterhaltung der Vakuumverhältnisse seine Stellung ändert und die Zuführung des Milchstroms durch die Bypass-Leitung 8 in die Milchleitung 1 bei gleichzeitigem Abschluß der Ableitung aus der Meßeinrichtung 3 gewährleistet.

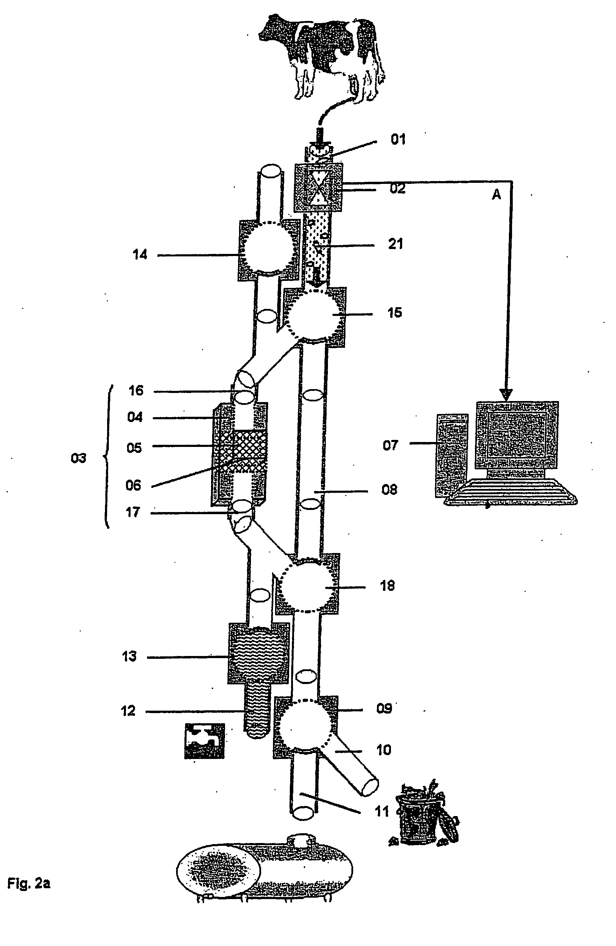

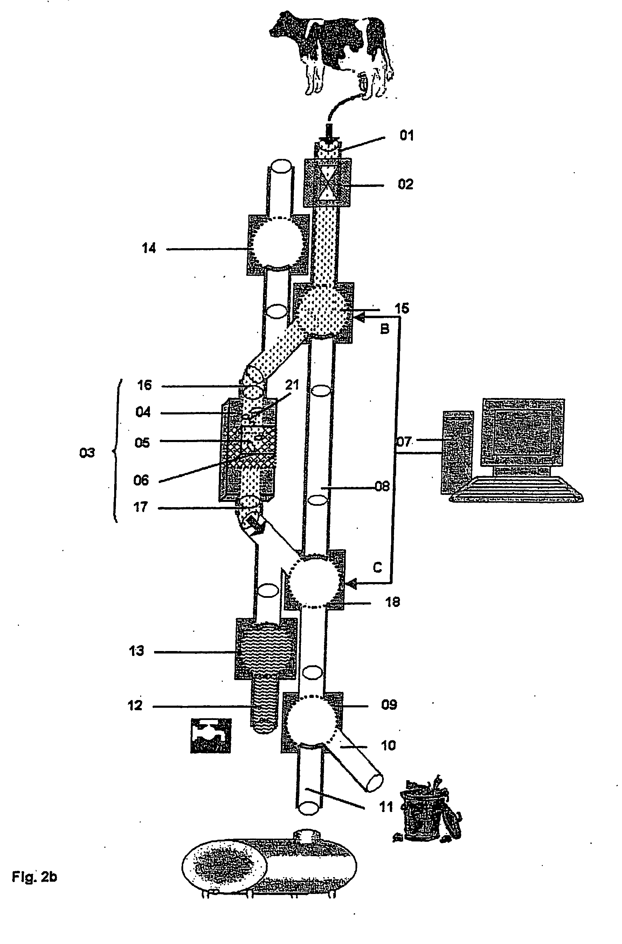

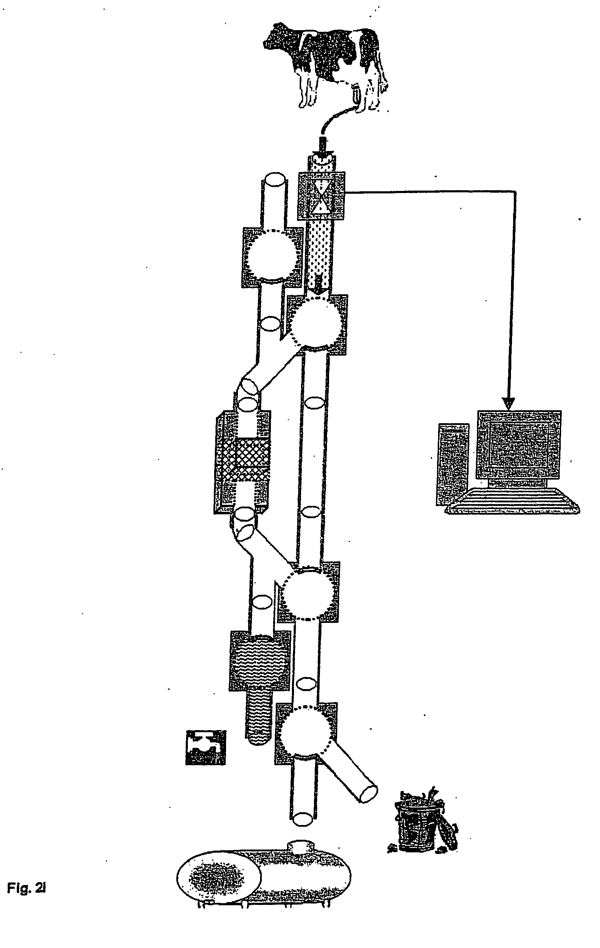

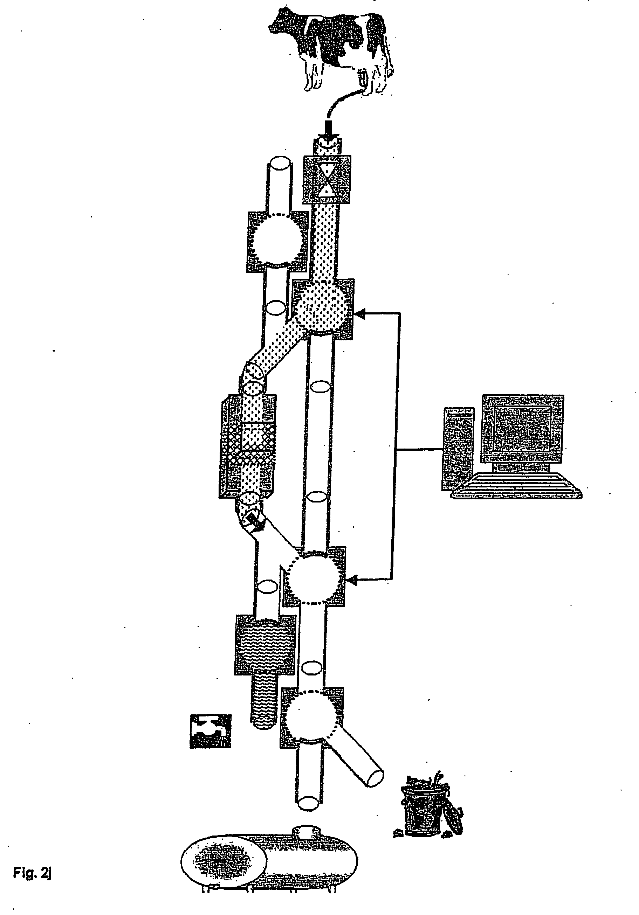

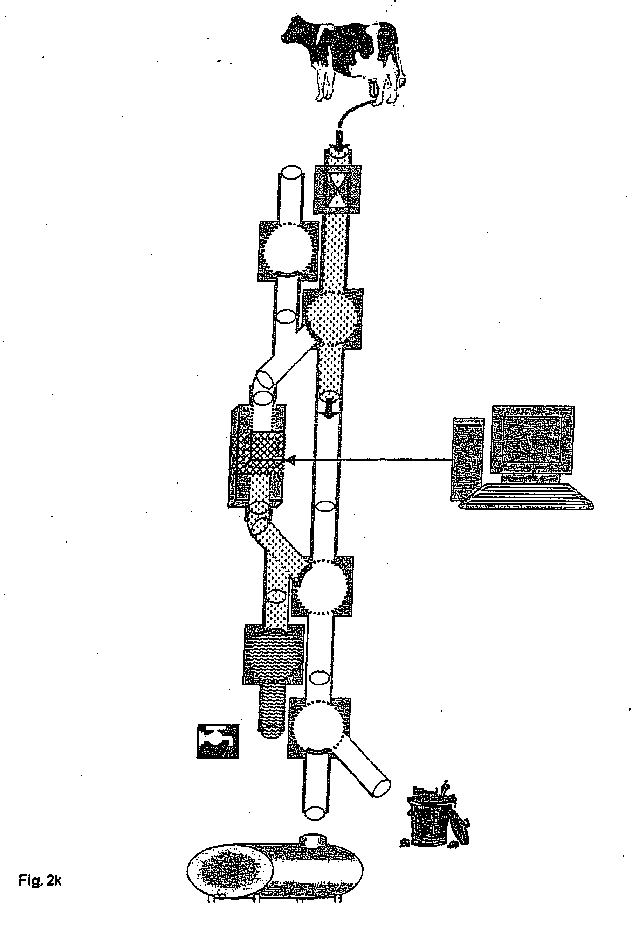

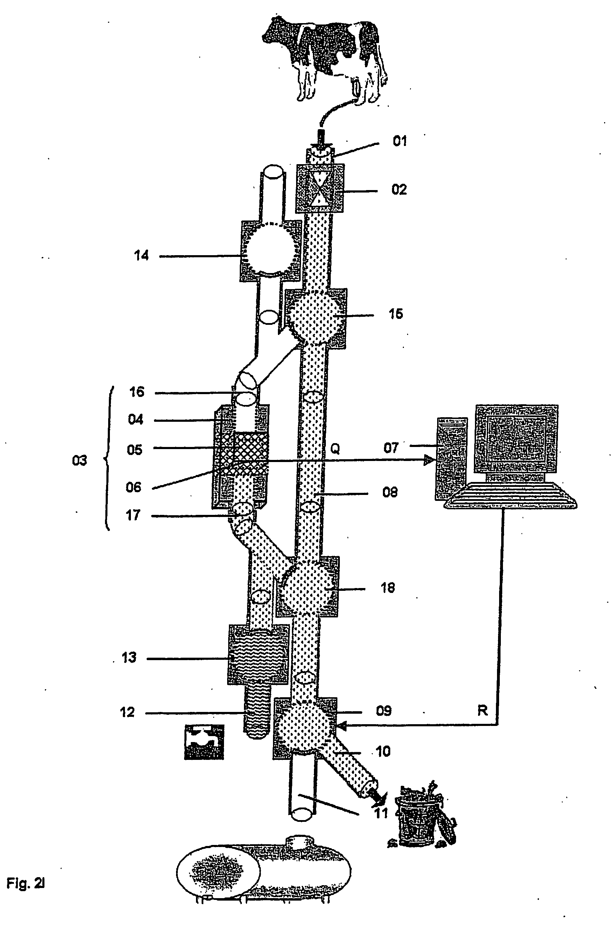

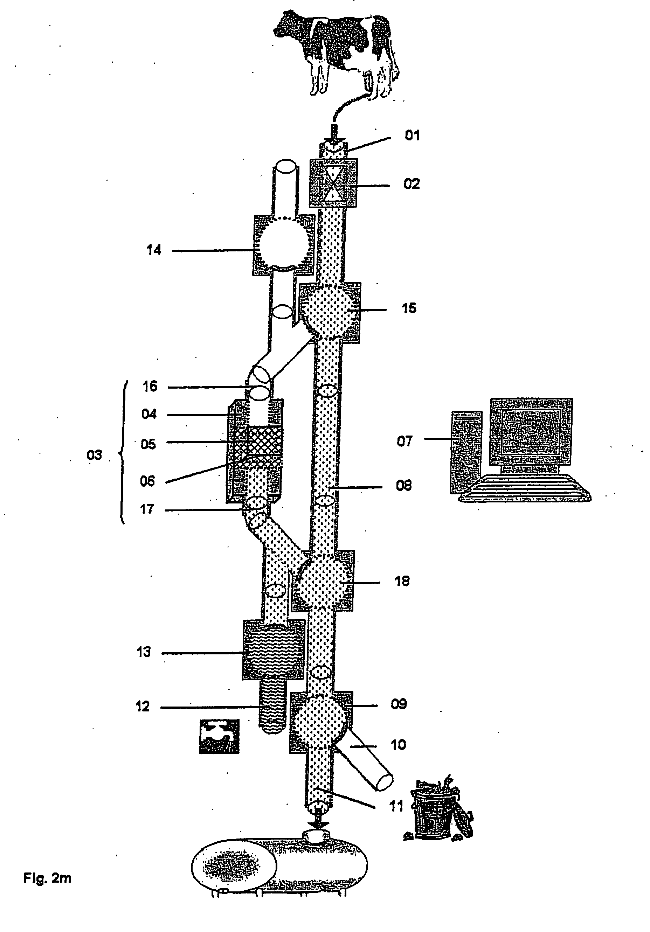

Fig. 2a zeigt eine Ausgangssituation für die Selektion von Milch. Durch ein Signal A, bei dem es sich um ein Signal des Milchflusssensors 2 handelt, wird die Steuereinheit 7 angesteuert. Die Steuereinheit 7 erhält hierbei ein Signal, das Milch in der Milchleitung 1 zur Messeinrichtung 3 strömt.

Die Steuereinheit 7 steuert durch ein ausgehendes Signal B das Ventil 15 und durch ein ausgehendes Signal C das Ventil 18 an (Fig. 2b), so dass der Milchstrom nach Änderung der Ventilstellungen nicht mehr die Meßeinrichtung 3, sondern die Bypass-Leitung 8 durchströmt.

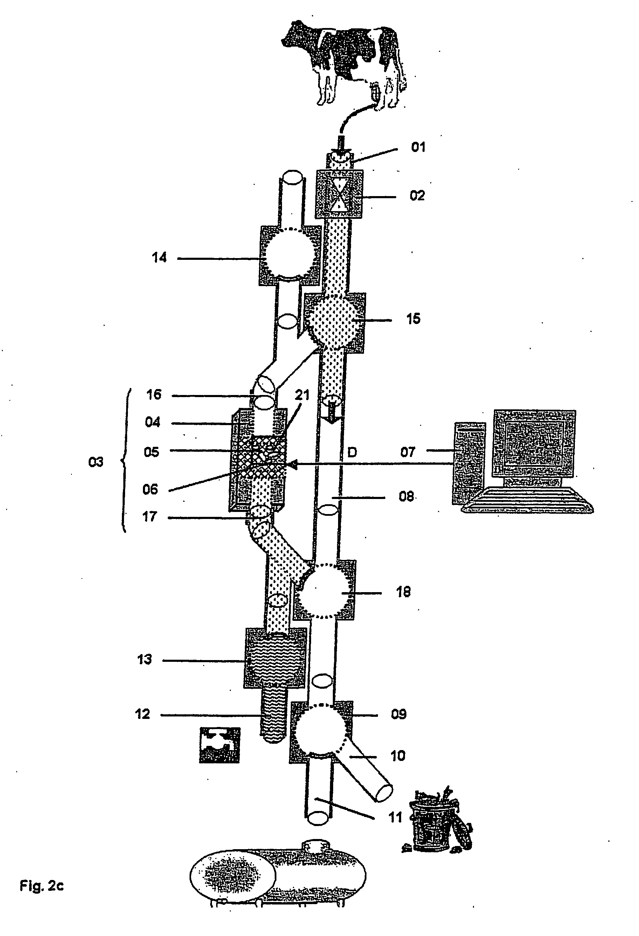

Vorzugsweise steuert die Steuereinheit 7 zeitverzögert mit dem Signal D die Detektoreinheit 6 der Meßeinrichtung 3 an, die dann die Oberfläche des Filter 5 und möglicherweise vorhandene Flocken bzw. Partikel 21 detektiert (Fig. 2c).

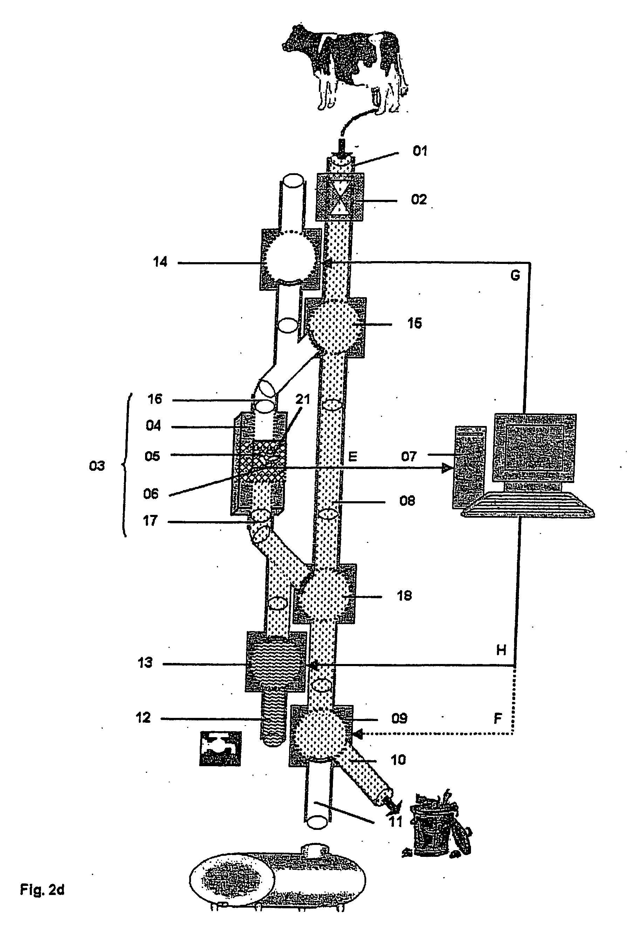

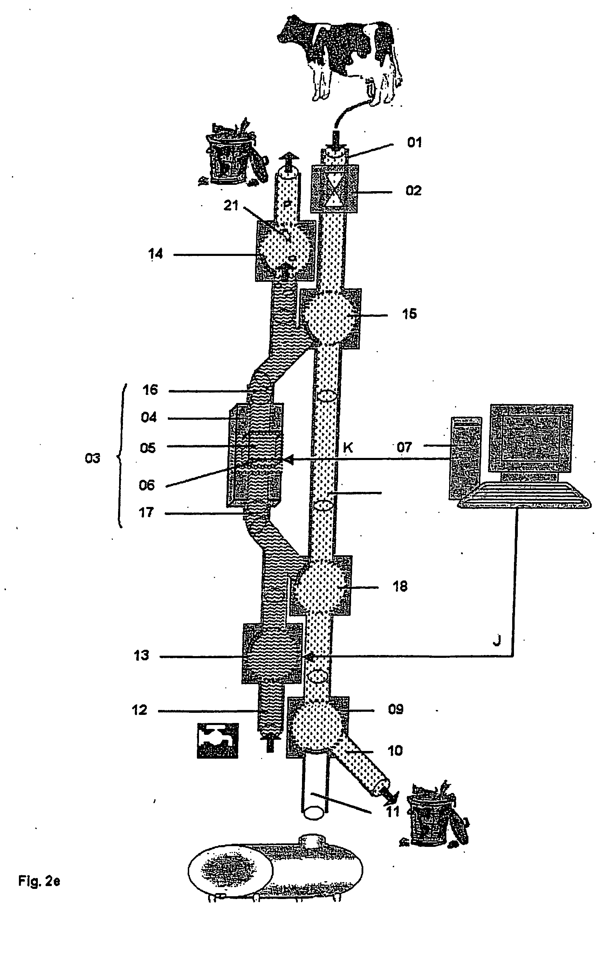

Die Detektoreinheit 6 sendet nach erfolgter Detektion ein Signal E an die Steuereinheit 7 (Fig. 2d). Die Steuereinheit 7 ändert aufgrund des positiven Befunds nicht die Ventilstellung der Ventileinrichtung 9 durch ein Signal F, so dass die als nicht verkehrsfähig detektierte Milch unverändert durch die Leitung für nicht verwertbare Milch 10 abfließt (Fig. 2d).

Die Steuereinheit 7 steuert durch die ausgehenden Signale G und H die Ventile 14 und 13 der Reinigungseinrichtung an (Fig. 2d), so dass diese den Zufluß von Reinigungsmittel bzw. -flüssigkeit vorzugsweise mit Überdruck aus der Leitung für Reinigungsmittel 12 zuläßt.

Das Reinigungsmittel strömt entgegen der Milchflußrichtung durch den Ablauf 17, die Meßkammer 4, den Filter 5, den Zulauf 16 unter Ablösung und Mitnahme der Flocken bzw. Partikel 21 und vorhandener Restmilch durch die Ventileinheit 14 (Fig. 2e und Fig. 6).

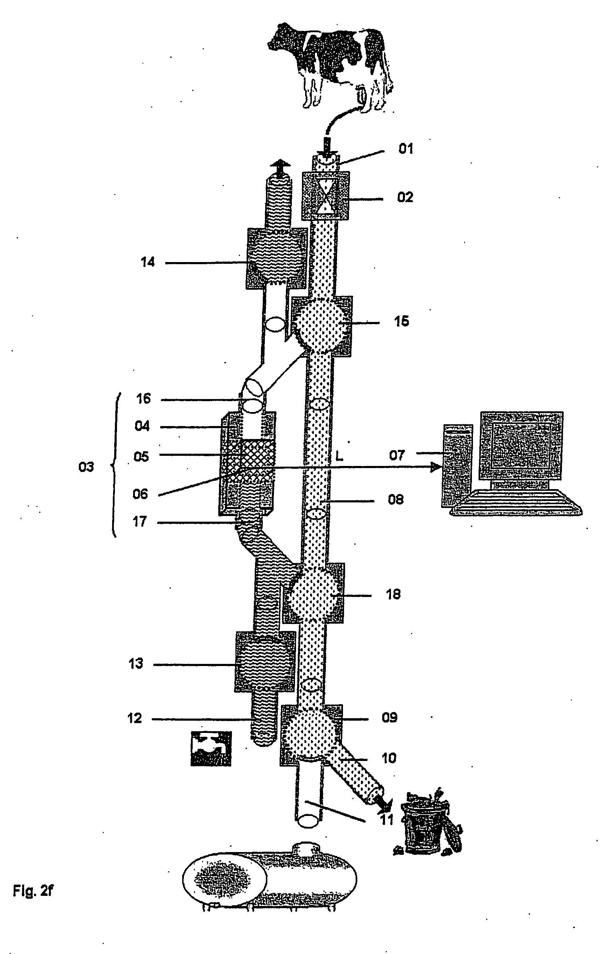

Vorzugsweise zeitgesteuert wird nach Ablauf einer definierten Zeitspanne durch die Steuereinheit 7 ein Signal J an die Ventileinheit 13 gesendet, die durch Änderung der Ventilstellung den Zustrom von Reinigungsmittel beendet (Fig. 2e). Währenddessen bleibt die Ventileinheit 14 in unveränderter Ventilstellung, so dass Restwasser im Zulauf 16 durch das geöffnete Ventil 14 abfließen kann (Fig. 2e /2f).

Die Steuereinheit 7 sendet vorzugsweise zeitverzögert ein Signal K an die Detektoreinheit 6, die den Reinigungserfolg dann überprüft (Fig. 2e). Über das Signal L wird der Status des Reinigungserfolges von der Detektoreinheit 6 an die Steuereinheit 7 gesendet. In Abhängigkeit vom Reinigungsstatus kann der Reinigungsvorgang wiederholt werden (Fig. 2f). Mit Beendigung des erfolgreichen Reinigungsvorgangs ist die Detektion von Flocken bzw. Partikeln beendet, während die Kuh weiterhin gemolken wird.

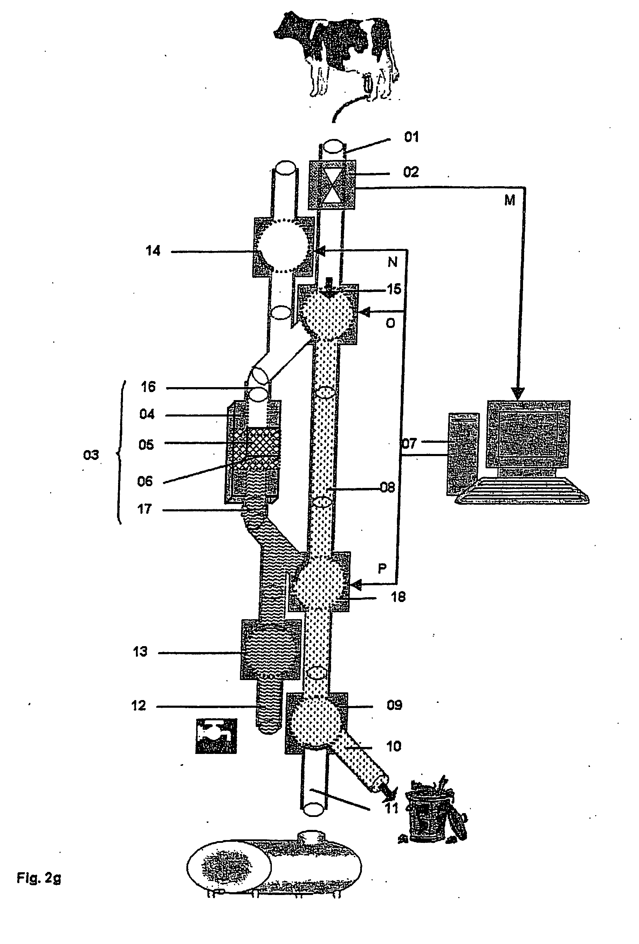

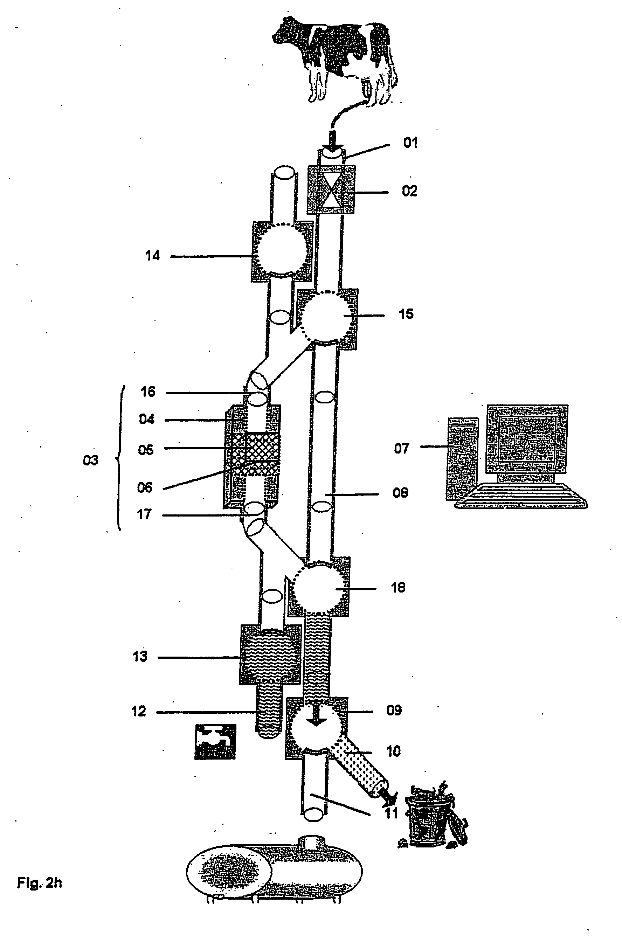

Das Melkende wird durch einen abnehmenden bzw. fehlenden Milchfluß in der Milchleitung 1 eingeleitet und durch den Milchflußsensor 2 festgestellt, der ein Signal M an die Steuereinheit 7 sendet. Die Steuereinheit 7 sendet daraufhin an die Ventileinheiten 14 ein Signal N, 15 ein Signal O und 18 ein Signal P, die ihre Ventilstellungen ändern (Fig. 2g). Aufgrund der Stellungsänderung von Ventil 18 kann das durch den Reinigungsvorgang im Ablauf 17 verbliebene Restwasser durch das Restvakuum aus dem Leitungssystem in die Leitung für nicht verwertbare Milch 10 geführt werden (Fig. 2h). Mit Erreichen der Ausgangsstellungen in allen Ventileinheiten ist das System für den nächsten Melkvorgang bereit (Fig. 2h).

Die folgenden Fig. 2i bis 2m geben für eine eutergesunde Kuh die Abfolge wieder, die bereits in den Fig. 2a bis 2h für eine klinisch euterkranke Kuh beschrieben wurde. Die Verfahrensführung, wie sie in den Fig. 2a bis 2c dargestellt und beschrieben ist, entspricht der Darstellung in den Fig. 2i bis 2k.

Die Detektoreinheit 6 sendet in Fig. 21 aufgrund des negativen Befunds (keine Flocken bzw. Partikel) ein Signal Q an die Steuereinheit 7. Die Steuereinheit 7 sendet ein Signal R an die Ventileinheit 9, die durch Änderung der Ventilstellung die Leitung für nicht verwertbare Milch 10 verschließt und die Leitung für verwertbare Milch 11 freigibt, so dass die Milch aus der Milchleitung 1 in den Milchsammelbehälter strömt (Fig. 2m).

Ein Reinigungsgang kann vorzugsweise entfallen, da die Milch nicht sinnfällig verändert ist. Der im Ablauf 17 verbliebene Milchrest wird mit der nächsten, nachfolgenden Melkung abgeleitet.

### Bezugszeichenliste

- 1: Milchleitung
- 2: Milchflußsensor
- 3: Meßeinrichtung
- 4: Meßkammer
- 5: Filter
- 6: Detektoreinheit
- 7: Steuereinheit
- 8: Bypass-Leitung
- 9: Ventileinrichtung
- 10: Leitung für nicht-verwertbare Milch
- 11: Leitung für verwertbare Milch
- 12: Leitung für ein Reinigungsmittel
- 13: Ventileinheit
- 14: Ventileinheit
- 15: Ventil
- 16: Zulauf
- 17: Ablauf
- 18: Ventil

## Patentansprüche

1. Verfahren zur Selektion von Milch, bei dem
vor einer Messkammer (4) eine Milchflusserkennung (2) erfogt, wobei eine Reaktion auf das vom Milchflusssensor eingehende Signal um eine zu definierende Zeitspanne zeitverzögert erfolgt,
ein Milchstrom innerhalb einer vorgegebenen Zeitspanne in eine Messkammer (4) einer Messeinrichtung (3) mit wenigstens einem Filter (5) und einer Detektoreinheit (6) geführt wird,
der Milchstrom nach der vorgegebenen Zeitspanne in einer Bypass-Leitung (8) an der Messkammer (4) vorbei geführt wird,
eine Detektion einer Oberfläche des Filters (5) nach der vorgegebenen Zeitspanne erfolgt,
eine Auswertung der Detektion erfolgt, wobei in Abhängigkeit vom Auswerteergebnis der Milchstrom entweder zum Sammelbehälter für verwertbare Milch geleitet oder verworfen wird.

2. Verfahren nach Anspruch 1, bei dem der Milchstrom während der Detektion verworfen wird.

3. Verfahren nach Anspruch 1 oder 2, bei dem vor einer jeden die Detektion wenigstens die Messkammer (4) gegenüber einem Milchstrom abgeschlossen und gereinigt wird.

4. Verfahren nach Anspruch 3, bei dem ein Reinigungsmittel entgegengesetzt zur Strömungsrichtung des Milchstroms mindestens den wenigstens einen Filter (5) durchströmt.

5. Verfahren nach Anspruch 3 oder 4, bei dem vor und nach der Messkammer (4) jeweils eine Ventileinrichtung (13, 14) vorgesehen ist, die die Zu- und Ableitung des Reinigungsmittels aus einer Leitung (12) für Reinigungsmittel ermöglicht und die durch eine Steuereinheit (7) gesteuert werden.

6. Verfahren nach Anspruch 3, 4 oder 5, bei dem vor und nach der Messkammer (4) jeweils eine Ventileinrichtung (15, 18) vorgesehen ist, die die Messkammer (4) von der Milchleitung (1) abschließt und die durch eine Steuereinheit (7) gesteuert werden.

7. Verfahren nach einem der Ansprüche 1 bis 6, bei dem vor der Messkammer (4) eine Milchflusserkennung erfolgt.

8. Vorrichtung zur Selektion von Milch mit
einer Milchleitung (1),
einer in der Milchleitung (1) angeordneten Messeinrichtung (3), die eine Messkammer (4) mit wenigstens einem Filter (5) und einer Detektoreinheit (6) aufweist und mit einer Steuereinheit (7), die mit der Detektoreinheit (6) verbunden ist,
**gekennzeichnet durch** eine Bypass-Leitung (8), so dass der Milchstrom zunächst **durch** die Messeinrichtung (3) und dann **durch** die Bypass-Leitung (8) geführt wird und **durch** eine stromabwärts der Mündung der Bypass-Leitung (8) in der Milchleitung (1) angeordneten, **durch** die Steuereinheit (7) steuerbare Ventileinrichtung (9), **durch** die in Abhängigkeit von dem Ergebnis der Detektion eine Leitung (11) für die verwertbare Milch oder eine Leitung (10) für die nicht verwertbare Milch freigegeben wird, wobei stromaufwärts der Messeinrichtung (3) eine Einheit (2) zur Milchflusserkennung vorgesehen und diese mit der Steuereinheit (7) verbunden ist.

9. Vorrichtung nach Anspruch 8, **dadurch gekennzeichnet, dass** im Bereich des Zulaufs (16) und im Bereich des Ablaufs (17) der Messkammer (4) jeweils eine Ventileinrichtung (15, 18) vorgesehen ist, wobei die Ventileinrichtungen (15, 18) durch die Steuereinheit (7) so gesteuert werden, dass der Milchstrom entweder durch die Messeinrichtung (3) oder durch die Bypass-Leitung (8) geführt wird.

10. Vorrichtung nach Anspruch 8 oder 9, **dadurch gekennzeichnet, dass** diese eine Reinigungseinrichtung aufweist, wobei ein Reinigungsmittel entgegengesetzt zur Strömungsrichtung des Milchstroms mindestens den wenigstens einen Filter (5) durchströmt.

11. Vorrichtung nach Anspruch 10, **dadurch gekennzeichnet, dass** eine Leitung (12) für ein Reinigungsmittel vorgesehen ist, dass die Messeinrichtung (3) im Strömungsweg des Reinigungsmittels angeordnet ist, und dass vor und nach der Messeinrichtung (3) jeweils eine Ventileinrichtung (13, 14) vorgesehen ist, wobei die Ventileinrichtungen (13, 14) durch die Steuereinheit (7) so gesteuert werden, dass eine Zu- und Ableitung eines Reinigungsmittels aus der Leitung für Reinigungsmittel (12) in und aus der Messkammer (4) erfolgen kann.

## Claims

1. Method for selecting milk, in which an identification (2) of the flow of milk is carried out upstream of a metering chamber (4), wherein a reaction to the signal coming in from the milk flow sensor occurs, which is temporally delayed by a time period to be defined,
within a predetermined time period a flow of milk is guided into a metering chamber (4) of a metering device (3) with at least one filter (5) and a detector unit (6),
after the predetermined time period the flow of milk is passed by the metering chamber (4) in a bypass-conduit (8),
a detection of a surface of the filter (5) is carried out after the predetermined time period,
an analysis of the detection is carried out, wherein depending on the analysis result the milk flow is either directed to the collecting tank for utilisable milk or is rejected.

2. Method according to claim 1, in which the milk flow is rejected during detection.

3. Method according to claim 1 or 2, in which prior to every detection at least the metering chamber (4) is closed to a flow of milk and is cleaned.

4. Method according to claim 3, in which a cleaning agent flows in opposite direction to the flow direction of the milk flow at least through the at least one filter (5).

5. Method according to claim 3 or 4, in which in each case one valve means (13, 14) is provided in front of and after the metering chamber (4), which valve means allow the supply and the offtake of the cleaning agent from a conduit (12) for cleaning agent and which are controlled by a control unit (7).

6. Method according to claim 3, 4 or 5, in which in each case one valve means (15, 18) is provided in front of and after the metering chamber (4), which valve means close the metering chamber (4) against the milk conduit (1) and which are controlled by a control unit (7).

7. Method according to one of claims 1 to 6, in which an identification of the milk flow is carried out upstream of the metering chamber (4).

8. Apparatus for selecting milk, comprising
a milk conduit (1),
a metering device (3) arranged in the milk conduit (1), which metering device has a metering chamber (4) with at least one filter (5) and a detector unit (6) and
a control unit (7), which is connected to the detector unit (6),
**characterized by** a bypass-conduit (8), so that the milk flow is guided at first through the metering device (3) and then through the bypass-conduit (8) and through a valve means (9), which is arranged in the milk conduit (1) downstream of the port of the bypass-conduit (8) and which is controllable by the control unit (7) and by which a conduit (11) for the utilisable milk or a conduit (10) for the non-utilisable milk is released depending on the result of detection, wherein a unit (2) for the identification of the milk flow is provided upstream of the metering device (3) and which unit (2) is connected to the control unit (7).

9. Apparatus according to claim 8, **characterized in that** in the region of the inlet (16) and in the region of the outlet (17) of the metering chamber (4) there is provided in each case one valve means (15, 18), wherein the valve means (15, 18) are controlled by the control unit (7), so that the milk flow is guided either through the metering device (3) or through the bypass-conduit (8).

10. Apparatus according to claim 8 or 9, **characterized in that** it has a cleaning device, wherein a cleaning agent flows in opposite direction to the flow direction of the milk flow at least through the at least one filter (5).

11. Apparatus according to claim 10, **characterized in that** a conduit (12) is provided for a cleaning agent, that the metering device (3) is arranged in the flow path of the cleaning agent and that in each case one valve means (13, 14) is provided in front of and after the metering device (3), wherein the valve means (13, 14) are controlled by the control unit (7), so that a supply and an offtake of a cleaning agent from the conduit for cleaning agent (12) can be realized into and out of the metering chamber (4).

## Revendications

1. Procédé pour la sélection de lait, dans lequel une identification du flux de lait (2) est effectuée an amont d'une chambre de mesure (4), dans quel cas une réaction au signal arrivant du capteur de flux de lait a lieu de manière retardée d'un espace de temps à définir,
un flux de lait est guidé à l'intérieur d'un espace de temps prédéterminé dans une chambre de mesure (4) d'une installation de mesure (3) avec au moins un filtre (5) et une unité de détecteur (6),
après l'espace de temps prédéterminé le flux de lait est conduit à coté de la chambre de mesure (4) dans une conduite de dérivation (8),
une détection d'une surface du filtre (5) est effectuée après l'espace de temps prédéterminé,
une analyse de la détection est effectuée, dans quel cas en fonction du résultat d'analyse le flux de lait est soit guidé vers le réservoir collecteur pour le lait utilisable, soit est rejeté.

2. Procédé selon la revendication 1, dans lequel le flux de lait est rejeté durant la détection.

3. Procédé selon la revendication 1 ou 2, dans lequel avant chaque détection au moins la chambre de mesure (4) est fermée contre un flux de lait et est nettoyée.

4. Procédé selon la revendication 3, dans lequel un agent de nettoyage s'écoule de manière opposée au sens d'écoulement du flux de lait au moins à travers l'au moins un filtre (5).

5. Procédé selon la revendication 3 ou 4, dans lequel respectivement une installation de valve (13, 14) est prévue devant et derrière la chambre de mesure (4), lesquelles installations de valve permettent l'amenée et l'évacuation de l'agent de nettoyage d'une conduite (12) pour agents de nettoyage et lesquelles sont commandées par une unité de commande (7).

6. Procédé selon la revendication 3, 4 ou 5, dans lequel respectivement une installation de valve (15, 18) est prévue devant et derrière la chambre de mesure (4), lesquelles installations de valve ferment la chambre de mesure (4) contre la conduite de lait (1) et lesquelles sont commandées par une unité de commande (7).

7. Procédé selon l'une des revendications 1 à 6, dans lequel une identification du flux de lait est effectuée en amont de la chambre de mesure (4).

8. Dispositif pour la sélection de lait, comprenant
une conduite de lait (1),
une installation de mesure (3) agencée dans la conduite de lait (1), laquelle installation de mesure (3) présente une chambre de mesure (4) avec au moins un filtre (5) et une unité de détecteur (6) et
une unité de commande (7), qui est reliée à l'unité de détecteur (6),
**caractérisé par** une conduite de dérivation (8), de sorte que le flux de lait, est d'abord guidé à travers le dispositif de mesure, et ensuite à travers la conduite de dérivation (8) et à travers une installation de valve (9) étant agencée en aval de l'embouchure de la conduite de dérivation (8) dans la conduite de lait (1) et pouvant être commandée par l'unité de commande (7), par laquelle installation de valve (9) une conduite (11) pour le lait utilisable ou une conduite (10) pour le lait n'étant pas utilisable étant libérée en fonction du résultat de la détection, une unité (2) pour identifier le flux de lait étant prévue en amont de l'installation de mesure (3) et celle-ci étant reliée à l'unité de commande (7).

9. Dispositif selon la revendication 8, **caractérisé en ce que** respectivement une installation de valve (15, 18) est prévue dans la région de l'amenée (16) et dans la région de l'évacuation (17) de la chambre de mesure (4), les installations de valve (15, 18) étant commandées de manière telle par l'unité de commande (7) que le flux de lait est guidé soit à travers l'installation de mesure (3), soit à travers la conduite de dérivation (8).

10. Dispositif selon la revendication 8 ou 9, **caractérisé en ce que** celui-ci présente une installation de nettoyage, un agent de nettoyage s'écoulant de manière opposée au sens d'écoulement du flux de lait au moins à travers l'au moins un filtre (5).

11. Dispositif selon la revendication 10, **caractérisé en ce qu'**une conduite (12) est prévue pour un agent de nettoyage, **en ce que** l'installation de mesure (3) est agencée dans le trajet d'écoulement de l'agent de nettoyage et **en ce que** respectivement une installation de valve (13, 14) est prévue devant et derrière l'installation de mesure (3), les installations de valve (13, 14) étant commandées de manière telle par l'unité de commande (7) qu'une amenée et une évacuation d'un agent de nettoyage hors de la conduite pour agents de nettoyage (12) peut être effectuée dans et hors de la chambre de mesure (4).
